# EUROPÄISCHE PATENTSCHRIFT

(11) **EP 1 940 652 B1**
(45) Veröffentlichungstag und Bekanntmachung des Hinweises auf die Patenterteilung: **26.05.2010**
(21) Anmeldenummer: 06807370.9
(22) Anmeldetag: 18.10.2006
(51) Int. Cl.: B60R 11/00, B60R 7/00, B60R 7/04

(54) **LADESICHERUNG ZUM BEFESTIGEN EINES BEHAELTNISSES AUF EINEM SITZ**
LOAD SECURING SYSTEM FOR FIXING A CONTAINER ON A SEAT
DISPOSITIF DE SECURITE DE CHARGEMENT POUR FIXER UN CONTENANT SUR UN SIEGE

(30) Priorität: 21.10.2005 DE 202005016645 U; 10.11.2005 DE 202005017519 U; 22.09.2006 DE 202006014750 U
(43) Veröffentlichungstag der Anmeldung: 09.07.2008
(73) Patentinhaber: Dittmann Products GmbH, 97509 Lindach (DE)
(72) Erfinder: DITTMANN, Franz, 97509 Lindach (DE)
(74) Vertreter: Pröll, Jürgen
(86) Internationale Anmeldenummer: PCT/EP2006/067536
(87) Internationale Veröffentlichungsnummer: WO 2007/045668

(56) Entgegenhaltungen:
- JP-A- 9 118 165
- JP-A- 11 301 356
- JP-A- 2001 158 302
- JP-A- 2003 246 235
- US-B1- 6 217 268

## Beschreibung

Die Erfindung betrifft eine Ladesicherung zum Befestigen eines Behältnisses oder volumiger Gegenstände auf einem Sitz, insbesondere auf einem Rücksitz, eines Fahrzeugs mit Sicherheitsgurten und mit Schlosssystemen für die Sicherheitsgurte.

Es ist bekannt, auf Kraftfahrzeugrücksitze tragbare Tiertransportbehälter zu stellen. Im Falle eines plötzlichen Abbremsens kann dieser Behälter beschleunigt nach vorne gleiten, wodurch das Tier verletzt werden kann. Das gleiche Problem ist auch bei auf Rücksitzen aufstellbaren Babytragetaschen oder wannenförmigen Babybetten gegeben.

Die beschriebene Problematik stellt sich auch in Bezug auf solche Behälter, mit denen Waren transportiert werden. So können z.B. durch das Vorschnellen eines Korbes, in dem sich Lebensmittel, z. B. Joghurtbecher, befinden, diese durch die auftretenden Beschleunigungskräfte bersten und andere Lebensmittel verunreinigen. Bei einem Seitencrash wird der Behälter durch die hohe Beschleunigungsenergie ebenfalls plötzlich verschoben, wobei die seitliche Gittertür durch die Beschleunigungsbewegung des Tieres oder Gegenstandes aufgesprengt werden kann, wodurch es zu Verletzungen des Tieres oder Beschädigungen des Gegenstandes kommen kann.

Zur Ladesicherung von Lasten auf Paletten oder anderen Auflagen während des Transportes, sowohl mittels Land- oder Luftfahrzeugen oder auch auf Schiffen, ist es aus der DE 70 33 624 U bekannt, über das Transportgut ein Kopfnetz und daran angeschlossene Spanngurte und bei höheren Lasten zusätzlich ein zwischengeschaltetes zweiteiliges Seitennetz zur Sicherung zu verwenden, wobei alle Netze aus rautenförmigen, diagonal angeordneten Gurten gebildet sind. Das Netz wird mittels der Spanngurte an der Bodenplatte befestigt. Eine ähnliche wiederverwendbare Ladesicherung für gestapelte Güter ist aus der DD 223 680 A1 sowie aus der GB 1 056 976 bekannt.

Aus der JP 2001 158302 A ist eine Ladesicherung zum Befestigen eines Behälters oder volumiger Gegenstände auf einem Sitz in einem Fahrzeug mit Sicherheitsgurten und mit Schlosselementen für die Sicherheitsgurte bekannt, wobei die Ladesicherung aus einem Netz aus nicht dehnbaren Materialien besteht, wobei die Größe der belegten Fläche so groß ausgelegt ist, dass die Ladesicherung die Vorderfläche des auf den Sitz aufgesetzten und mit der Rückseite an der Rückenlehne anliegenden Behältnisses überdeckt und mit mindestens einem schmalen Bereich die Oberseite und mit Seitenabschnitten Teilbereiche der Seitenteile des Behältnisses übergreift. An den Seitenabschnitten sind Befestigungselemente zur Fixierung an Fixpunkten an der Rückenlehne oder im Bereich des Übergangs der Rückenlehne zum Sitzteil des Sitzes vorgesehen.

Es ist weiterhin bekannt, Ladegut im Kofferraum eines Kraftfahrzeuges, insbesondere in Kombi-Kraftfahrzeugen, mittels Überwurfnetzen an Bodenhaltern zu fixieren.

Der Erfindung liegt die Aufgabe zugrunde, eine Ladesicherung so auszubilden, dass sie geeignet ist, ein Behältnis an vorhandenen Fahrzeugsitzen so zu fixieren, dass es beim Abbremsen nicht von dem Sitzteil heruntergleiten kann, bei einer seitlichen Stoßbelastung sich nicht merklich verschiebt, hoch belastbar ist und an die Größe des Ladegutes anpassbar ist.

Gelöst wird die Aufgabe durch Ausgestaltung der Ladesicherung gemäß den im Anspruch 1 angegebenen Merkmalen.

Vorteilhafte Weiterbildungen sind in den Unteransprüchen detailliert angegeben. Die Ladesicherung kann zum Befestigen von Behältnissen jeglicher Art, aber auch für Körbe, volumiger Gegenstände oder Lasten verwendet werden. Besonders vorteilhaft kann damit auch ein Tierkäfig oder ein Tiertransportbehältnis gesichert werden. Die Behältnisse können Hartschalenbehältnisse aus Kunststoff, aber auch Behältnisse mit Rahmenstruktur und Bespannungen mit flexiblem Material sein. Ebenso können die Behältnisse als Tragebehältnisse ausgeführt sein.

Die Ladesicherung nach der Erfindung hat den Vorteil, dass sie innerhalb bestimmter Größenkategorien an verschiedene Behältnisse auf einfache Weise angepasst werden kann, dass sie sowohl die vordere Seite des Behältnisses als auch Teilbereiche der Seitenteile umschließt und im Übrigen fest an dem Behältnis verankert ist und über die seitlichen Überlängen an vorhandenen Fixpunkten am Sitz oder an der Karosserie des Fahrzeuges gesichert werden kann. Die seitlichen Quergurte, die kürzer sind als die übrigen Quergurte, werden durch die Umlenk- und Spannelemente hinter den Ösen daran gehindert, über die Umlenk- und Spannelemente hinaus sich zu verschieben und bilden eine seitliche, nestförmige Aufnahme für den Behälter. Durch die dann gewissermaßen diagonal verlaufenden Abschlussgurte mit den Überlängen wird der Behälter auch gegen Seitenkräfte geschützt. Bei Fahrzeugen mit Sicherheitsgurten kann in weiterer Ausgestaltung vorgesehen sein, dass die seitliche Überlänge an einer Seite der Ladesicherung mit dem Schultergurt verbunden wird, während die Überlänge an der anderen Seite über ein Schlosssystem mit dem Schloss eines Sicherheitsgurtes beispielsweise verbindbar ist oder mit einem Querbolzen, der als Isofix-Sicherungselement an dem Sitz oder an der Karosserie vorgesehen ist. Die Befestigung kann auch in der Weise erfolgen, dass ein am umlaufenden Gurt vorgesehener Karabinerhaken oder eine Klemmsicherung oder andere Einhaksicherung auf den Beckengurt eines Dreipunktsicherheitsgurtes oder auf den Schultergurt gehängt wird. Die Schlosszunge des Dreipunktsicherheitsgurtes wird in das nächste Schloss vom Nebensitz eingeklickt, wenn das Behältnis bzw. die Box oder der Gegenstand breiter als der Einzelsitz ist. Auch können zwei Karabinerhaken vorgesehen sein, die nur über den Beckengurt eingehängt und gesichert werden. In diesem Fall ist eine zusätzliche Sicherung über mindestens einen Quergurt möglich, der hinter dem Schultergurt hindurchgezogen und in die zugeordnete Spanneinrichtung eingeführt wird. Auch im Falle der Fixierung an sogenannte Isofix-Verbinder kann bei größeren Behältnissen der äußere Halter am Nachbarsitz verwendet werden. Die Fixierung der Überlängen kann mit dem Sicherheitsgurt erfolgen, dann brauchen keine gesonderten Schlosszungen vorgesehen sein. Dies hat den Vorteil, dass eine weitere Person sich auf dem Rücksitz mit einem weiteren Sicherheitsgurt anschnallen kann.

Durch die Verwendung relativ breiter Gurte, die in etwa die Breite normaler Fahrzeugsicherheitsgurte aufweisen sollten, kann ein große Öffnungen aufweisendes Netz durch Vernähung an den Kreuzpunkten und an dem umlaufenden Gurt hergestellt werden. Dieses netzförmige Gurtgebinde ist über die Vorderseite auf das Behältnis aufstülpbar. Durch die Möglichkeit, den umlaufenden Gurt mindestens an einem der beiden Längsabschnitte zu verkürzen, kann in bestimmten Grenzen auch eine Längenanpassung an die Länge des Behälters vorgenommen werden. Die Verkürzungsmittel können aber auch zur Verkürzung der Überlängen dienen. Hierfür sind bekannte Umlenk- und Spannmittel vorgesehen, die an einem Längsgurtabschnittsende oder in einem Überlängenabschnitt befestigt sind und durch die das andere Ende des Gurtes durchziehbar ist und selbsthemmend festklemmt. Es kann aber auch ein Stecksystem vorgesehen sein, das an einem Element entsprechende Umlenk- und Spannmittel aufweist, so dass vor der Befestigung eine Längeneinstellung vorgenommen kann und danach die beiden Steckelemente zusammengefügt werden.

Mit den genannten Mitteln ist eine Größenanpassung in bestimmten Bereichen möglich und dennoch ein sicherer Halt des Netzes an dem Behälter einerseits und durch die zur Befestigung an dem Sitz vorgesehenen Überlängen an dem Sitz andererseits auf einfache Weise gegeben.

Überraschenderweise hat sich gezeigt, dass dann, wenn entsprechend der Erfindung die Parallelnähte nicht linear parallel zueinander verlaufend angeordnet sind, sondern bogenförmig, nämlich kreisbogenförmig oder oval oder auch spiralförmig, aufgrund dynamischer Effekte eine wesentlich höhere Festigkeit der Nähverbindung der Gurtabschnitte gegeben ist. Selbst unter Verwendung schwächeren Nähgarns gegenüber dem von vorbekannten Nähverbindungen ist bei gleichen Belastungen kein Aufreißen solcher Nähverbindungen gegeben. Dies liegt primär daran, dass durch die Bogenführung der Nähte stets mehrere Nahtstellen zugleich belastet werden und damit eine breitere Kraftverteilung gegeben ist als bei Nähverbindungen mit Eckennahtstellen bekannter Art.

In einer Ausführungsform ist ein rundes Nähbild gegeben. Dabei können die Nähte spiralförmig ausgeführt sein. So wird die Naht beispielsweise auf einer Rundnähmaschine von innen beginnend spiralförmig nach außen genäht. Über die Breite des Gurtabschnittes können dabei beispielsweise sechs oder acht Nahtspuren von der Spirale beschrieben werden. Auf diesen Spuren können gleiche oder aber auch unterschiedliche Stichlängen verwendet werden. Das äußere Ende wird dann zweckmäßigerweise wieder nach innen über die Spurnähte vernäht, so dass ein Verbindungsgang nach innen entsteht und damit keine Belastung auf das Ende der Naht ausgeübt wird. Anfang und Ende der Spiralnaht liegen also im inneren Bereich.

Crashtests mit Gurtsystemen, bei welchen solche Nahtbilder verwendet worden sind, haben gezeigt, dass bei gleicher Belastung wie bei Nähbefestigungen mit vorbekannten Zick-Zack-Nähten oder parallelen Nahtbildern kein Aufreißen der Naht gegeben ist. Selbst mit etwas schwächerem Garn, womit eine preiswertere Ausführung realisierbar ist, werden die Sicherheitsvorschriften erfüllt, während der Einsatz von schwächerem Garn bei Nähverbindungen mit herkömmlichen Nähbildern zum Zerreißen der Naht führt.

In weiterer Ausgestaltung des Nähbildes mit einer spiralförmigen Naht kann auch eine weitere Spiralnaht in die Zwischenräume der ersten Naht eingebracht werden. Diese kann sowohl in gleicher als auch in gegenläufiger Richtung verlaufen. Die Enden der Naht können dabei parallel oder z.B. um 180° versetzt angeordnet sein oder aber auch in jeder anderen Winkelposition zueinander.

Weitere durchgeführte Versuche mit kreisrunden und ovalen Nähbildern, bei denen die Nähbahnen völlig parallel zueinander mit Nähmaschinen hergestellt werden, haben gezeigt, dass selbst bei beschränkter Anzahl von Nähten eine hohe Festigkeit der Nähverbindung gegeben ist. Ebenso hat sich gezeigt, dass bei Verwendung von Garnen gleichen Materials mit geringeren Durchmessern gegenüber dem verwendeten Material bei geraden Nähten oder Zick-Zack-Nähten eine höhere Festigkeit realisierbar ist, ohne dass die Nahtverbindung beim Crashtest aufreißt. Die runden oder ovalen Nähte können von innen beginnend nach außen parallel angelegt werden. Das Ende einer Nahtlinie wird durch eine Verbindungsnaht in eine parallele Ebene geführt. Auf dieser Ebene wird dann auf einer Umfangsbahn wiederum die nächste Naht angelegt und so weiter, bis eine ausreichende Anzahl paralleler Nähte gegeben ist. Das Ende wird dann ebenfalls als Verbindungsnaht nach innen geführt. Dadurch werden Anfang und Ende der Naht vollständig entlastet. Die positive Wirkung durch die bogenförmige Anordnung der Nähte auf die Reißfestigkeit ist bereits beschrieben.

Soll nun eine solche Naht zusätzlich verstärkt werden, so kann sie mit einer gleichen Nahtanordnung kombiniert werden. In diesem Fall wird beim Erreichen der äußeren Naht das Garnende um einen Teilsprung der Teilung der Nähte nach innen in einen Verbindungsnahtabschnitt überführt und dann auf der Umfangsbahn eine Zwischennaht eingefügt. Nach diesem Schema kann fortlaufend eine Naht nach der anderen eingefügt werden, bis die letzte im Mittenbereich verläuft. Diese Naht wird am schwächsten belastet, so dass das Ende des Nähgarns völlig entlastet ist, während die maximalen Kräfte primär von der Naht mit dem größten äußeren Umfang aufgefangen werden.

Durch die gewählte relativ kurze Stichlänge ist ersichtlich, dass die Kräfte vollständig aufgefangen werden, die bei einem Crash oder auch bei jeder anderen stärkeren Belastung (z.B. starkes Abbremsen) entstehen. Die Verbindungsnähte können bei einer solchen Anordnung parallel bzw. radial parallel oder aber auch im Winkel versetzt zueinander verlaufen. Ebenso können beispielsweise drei, vier Nahtpaare oder ein mehrfaches davon eine Nähverbindung bilden. Mindestens sollten vier kreis- oder ovalförmige Nahtpaare miteinander verschachtelt vorgesehen sein.

Die Erfindung wird nachfolgend anhand des in der Zeichnung dargestellten Ausführungsbeispiels ergänzend erläutert.

In der Zeichnung zeigen:
- FIG 1: eine ausgebreitete Ladesicherung gemäß der Er- findung, und
- FIG 2: eine auf einen Tiertransportbehälter aufge- brachte Ladesicherung,
- FIG 3,: ein Nähbild mit spiralförmiger Anordnung der Naht und
- FIG 4: eine Nahtanordnung mit ineinander verschachtel- ten kreisförmigen Nähten.

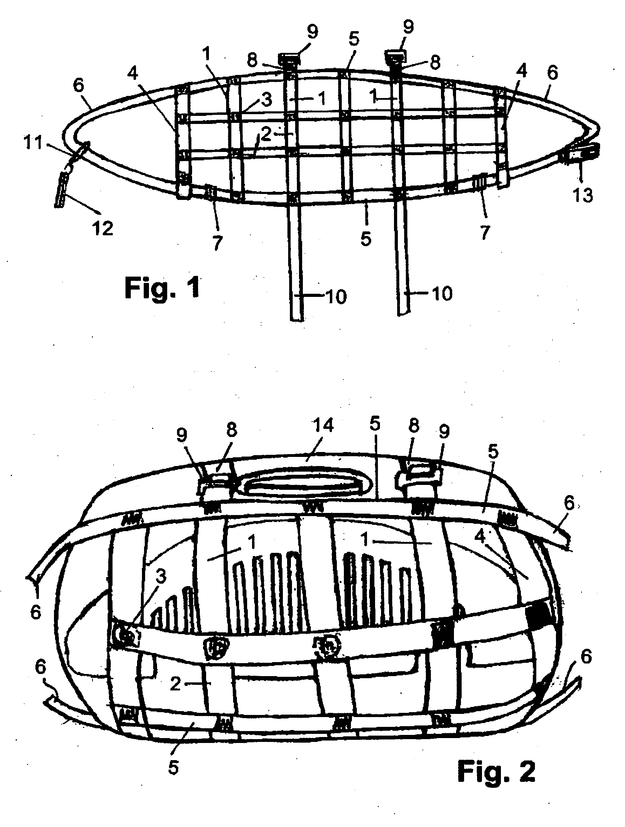

Die Ladesicherung nach Figur 1 besteht aus sich kreuzenden Gurten 1 und 2, die eine Breite aufweisen, die in etwa der Breite eines Kraftfahrzeugsicherheitsg.urtes entspricht. An den Kreuzungspunkten 3 sind die Gurte miteinander z. B. durch Zick-Zack-Nähte oder durch hochbelastbare Nähe nach der weiteren erfindungsgemäßen Ausgestaltung vernäht. Solche Nähte mit spiralförmiger kreisbahnförmiger Struktur stellen eine bessere Flächenkraftübertragung sicher. Die Enden der querverlaufenden Gurte 1 sind an den Längsabschnitten des umlaufenden-Abschlussgurtes 5 in gleicher Weise angenäht. Die Längen der Quergurte 1 sind so gewählt, dass das Netz ein längliches Oval bildet. Die äußeren Quergurte 4 sind einseitig an dem Längsabschnitt des umlaufenden Abschlussgurtes angenäht und weisen an dem anderen Ende eine Schlaufe auf, durch die der zweite Längsabschnitt des umlaufenden Abschlussgurtes 5 geführt ist, so dass eine seitliche Verschiebung ermöglicht wird. Der umlaufende Abschlussgurt 5 weist seitlich Überlängen 6 auf, die zur Befestigung des Gurtsystems an den Fixpunkten am Sitz oder der Karosserie dienen. Die Überlängen 6 sind ferner an Gurtumlenk- und Spannelementen 7 befestigt, über die die Gesamtlänge des umlaufenden Abschlussgurtes 5 veränderbar ist, so dass die Überlängen 6 an die Positionierung der Fixpunkte anpassbar sind. Zwei Quergurte 1 sind über die Längsabschnitte des Abschlussgurtes hinaus verlängert. An den Verlängerungsabschnitten 8 sind Umlenk- und Spanneinrichtungen 9 bekannter Art angebracht, durch die die Abschnitte 10 an der anderen Seite des Quergurtes nach dem Umlegen um den aus Figur 2 ersichtlichen Behälter hindurchgezogen und gespannt werden. An der linken Überlänge 6 ist eine Flachöse 11 mit einem Verschiebesicherungselement 12 befestigt. Die Öse kann auf einen Schultergurt oder einen Beckengurt eines Fahrzeugsicherheitsgurtes aufgesteckt werden, wodurch das Gurtsystem hieran fixiert ist. Das Verschiebesicherungselement 12 kann ein Abgleiten auf dem Schräggurt oder dem Becken- oder Bauchgurt verhindern. Diese Art der Befestigung ist in der DE 203 16 177 U1 beschrieben und kann hier voll zur Anwendung kommen. An der anderen Seite befindet sich ebenfalls verschiebbar auf der Überlänge 6 ein Steckhalter 13, der auf einen Querbolzen eines Fixpunktes am Sitz oder an der Karosserie aufsteckbar ist. Das Gurtsystem sollte immer mit einem Karabinersicherungselement oder mit Isofix-Konnektoren ausgestattet sein, um keine Anpassungen vornehmen zu müssen. Die Befestigung der Karabinerhaken oder Flachösen 11 erfolgt durch das Einhängen im Beckengurt oder im Schultergurt eines Dreipunktgurtes. Der Dreipunktgurt wird mit der Schlossgurt in das nächste Schloss vom Nebensitz eingeklickt, wenn der Behälter oder der Gegenstand breiter als der Einzelsitz ist. Sind seitlich zwei Karabinerhaken oder Flachösen vorgesehen, so werden diese zweckmäßigerweise nur am Beckengurt befestigt. Die beiden langen querverlaufenden Gurte 1 werden mit ihren überlangen Abschnitten hinter die Schultergurte hindurchgezogen und mit den Spanneinrichtungen verbunden. Hierüber ist eine Fixierung ebenfalls möglich. Auch bei der Verwendung von Isofix-Konnektoren ist die gleiche Befestigungsart realisierbar. Die Fixierung der Überlängen 6 erfolgt zweckmäßigerweise mit dem Sicherheitsgurt und nicht durch eigens daran angebrachte Schlosszungen, damit eine nebensitzende Person mit dem weiteren Sicherheitsgurt sich anschnallen kann. Die Sicherung kann aber auch durch an den Überlängen vorgesehenen Schlosszungen erfolgen.

Aus Figur 2 ist ersichtlich, dass das Gurtsystem gemäß Figur 1 über die Vorderseite eines Tiertransportbehälters umgelegt und hieran befestigt ist. Über die Überlängen kann der Behälter dann in der vorher beschriebenen Art und Weise am Sitz befestigt werden.

Wie aus Figur 1 ersichtlich, befinden sich die Gurtumlenk- und Spannelemente 7 zwischen einer Öse eines seitlichen Quergurtes 4 und dem nächstfolgenden Gurt 1. Dies hat den Vorteil, dass das so gebildete Netz um die Seitenteile partiell ausgelegt werden kann, bevor es an den Befestigungspunkten des Sitzes befestigt wird und beim Seitenaufprall die Ösen von den Gurtumlenk- und Spannelementen abgefangen werden, so dass ein seitliches Verschieben des Behälters verhindert wird. Der Abschlussgurt verläuft im Bereich der Seitenteile gewissermaßen diagonal. Crashtests haben gezeigt, dass hierdurch ein Durchschleudern eines Gegenstandes durch die Seitentür oder Seitenwand verhindert wird. Die in Figur 2 gezeigten Vernähmuster an den Kreuzungspunkten der Gurte zeigen auch spiralförmige Nähte. Diese haben den Vorteil, dass keine Eckfäden vorhanden sind, wie bei Zick-Zack-Nähten, die bei hohen Belastungen reißen können. Durch das spiralförmige Nähmuster halbieren sich praktisch die Belastungen auf die einzelnen Fäden stets bzw. werden die Belastungen auf eine größere Anzahl von Durchdringungsfäden verteilt.

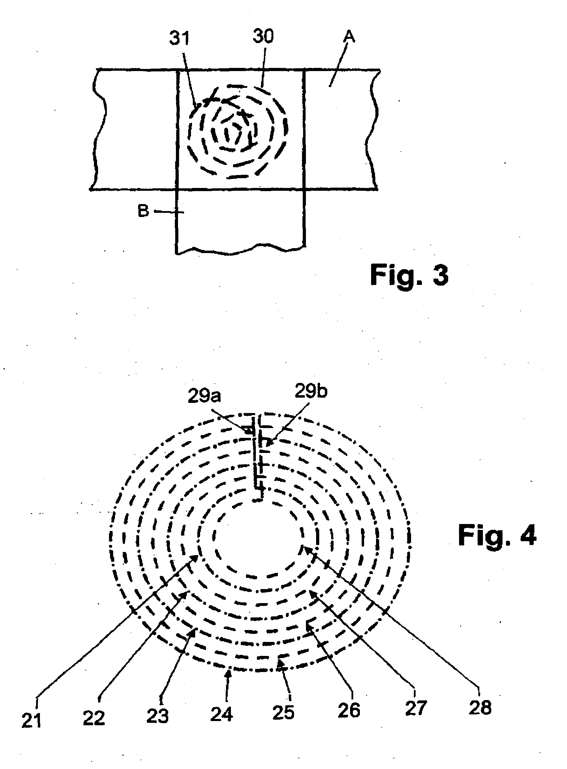

Figur 3 zeigt einen durchgehenden Gurtabschnitt A, an dem ein zweiter Gurtabschnitt B über eine Nähverbindung befestigt ist. Die Nähverbindung besteht im Ausführungsbeispiel aus einer spiralförmig mit einer Nähmaschine aufgebrachten Naht 30. Die Naht 30 beginnt im Inneren. Die Stiche werden in einem bestimmten Abstand zueinander auf den Spiralspuren von innen nach außen eingebracht und das Nähgarn eingezogen. Das Ende des Garns der letzten Nahtspur 31 wird dann erfindungsgemäß wieder als Verbindungsnaht über einen Verbindungsgang ins Innere hineinvernäht und endet im Zentrum der spiralförmigen Nahtanordnung.

Figur 4 zeigt ein Beispiel aus verschachtelt ineinander gefügten kreisrunden Nähten, die an die Stelle der in Figur 3 dargestellten spiralförmigen Nahtanordnung treten können. Der Start vom Fadenanfang erfolgt am inneren Punkt des Verbindungsgangs bzw. der Verbindungsnaht 29a auf der ersten Naht 21, die strichpunktiert eingezeichnet ist. Mit der Nähmaschine wird diese Naht 21 kreisförmig genäht. Anschließend erfolgt der Weg nach außen über den Verbindungsgang 29a durch Einbringen eines oder mehrerer Nahtstiche radial zur zweiten kreisförmigen Naht 22, die ebenfalls strichpunktiert eingezeichnet ist. Ist diese Naht mit der Maschine angelegt, so erfolgt wiederum ein Sprung nach außen durch Einbringung eines weiteren Verbindungsnahtabschnittes in den Verbindungsgang 29a zur Naht 23. Ist diese Naht 23 erstellt, so erfolgt ein weiterer Sprung nach außen über den Verbindungsgang 29a durch eine Verbindungsnaht zur Bildung der äußeren vierten Naht 24 dieser Nahtanordnung.

Bei dieser Ausführung besteht nun die Besonderheit darin, dass das Ende des Garnes nicht direkt wieder als Verbindungsnaht 29b in das Zentrum hineingenäht wird, sondern dass in einer Halbsprungteilung eine Verbindungsnaht in den Verbindungsgang 29b eingebracht wird, um auf die zwischen den Nähten 24 und 23 liegende Zone zu gelangen, um eine Zwischennaht 25 einzubringen. Ist diese Zwischennaht 25 eingebracht, so erfolgt wiederum ein Teilsprung in dem Verbindungsgang 29b durch eine Verbindungsnaht nach innen, um die Zwischennaht 26 in den nächsten Zwischenraum der benachbarten Nähte 23 und 22 einbringen zu können. Dem folgt in einem weiteren Schritt die Einbringung der Naht 27 in den Zwischenraum zwischen Naht 22 und 21. Nach Einbringen dieser Naht 27 wird wiederum am Verbindungsgang 29b eine Verbindungsteilnaht ins Innere gelegt und der Anfang der Innennaht 28 definiert und die Innennaht 28 genäht.

Es entstehen also jeweils vier Nahtpaare, die ineinander verschachtelt sind. Das Fadenende wird im inneren Bereich des Verbindungsganges zwischen der achten und der ersten Naht vernäht.

Es ist ersichtlich, dass beide Ausführungsbeispiele einen dynamischen Effekt bei Belastungen bewirken und sich die auf die Nahtverbindung auftreffenden Kräfte über die bogenförmigen Nähte verteilen. Deshalb sind derartige Nahtanordnungen bei Gurten wesentlich höher belastbar als solche, die aus zick-zack-förmigen oder aus geradlinigen Nähbildern bestehen.

### Bezugszeichenliste

- 1: Gurt
- 2: Gurt
- 3: Kreuzungspunkt
- 4: Quergurt
- 5: Abschlussgurt
- 6: Überlänge
- 7: Gurtumlenk- und Spannelement
- 8: Verlängerungsabschnitt
- 9: Spanneinrichtung
- 10: Abschnitt
- 11: Flachöse
- 12: Verschiebesicherungselement
- 13: Steckhalter
- 14: Behälter

- 21, 22, 23, 24, 25, 26, 27, 28: Nähte
- 29a, 29b: Nähte
- 30, 31: Nähte

## Patentansprüche

1. Ladesicherung zum Befestigen eines Behälters oder volumiger Gegenstände auf einem Sitz in einem Fahrzeug mit Sicherheitsgurten und mit Schlosselementen für die Sicherungsgurte,
wobei die Ladesicherung aus sich kreuzenden, miteinander vernähten und/oder verschweißten Gurten (1, 2) besteht, wobei die Größe der belegten Fläche so groß ausgelegt ist, dass die Ladesicherung mindestens die Vorderfläche des auf den Sitz aufgesetzten und mit der Rückseite an der Rückenlehne anliegenden Behältnisses (14) vollständig überdeckt und mit mindestens einem schmalen Bereich die Oberseite und mit Seitenabschnitten Teilbereiche der Seitenteile des Behältnisses (14) übergreift,
**dadurch gekennzeichnet dass** die Ladesicherung einen umlaufenden, mindestens an einer Längsseite einen in der Länge veränderbaren Abschlussgurt (5) mit seitlich überstehenden Überlängen (6) aufweist, an dem Befestigungselemente vorgesehen sind,
- dass die Gurtenden an den Längsabschnitten des umlaufenden Gurtes (5) befestigt sind, und
- dass die Befestigungselemente (11, 12, 13) an den Seitenabschnitten zum Verbinden mit einem Schulter- oder Beckengurt des Sicherheitsgurtes und/oder mit einem Einsteckschloss für die Schlosszunge des kraftfahrzeugeigenen Sicherheitsgurtes und/oder zur Fixierung an Fixpunkten an der Rückenlehne oder im Bereich des Übergangs der Rückenlehne zum Sitzteil des Sitzes vorgesehen sind.

2. Ladesicherung nach Anspruch 1, **dadurch gekennzeichnet, dass** das Gurtsystem mindestens einen quer zu den Längsabschnitten des umlaufenden Abschlussgurtes (5) mindestens hieran befestigten Quergurt (1, 2, 10) aufweist, der um den Behälter (14) legbar und an einem Quergurtabschnitt (8) an dem anderen Längsabschnitt des umlaufenden Gurtes (5) befestigbar ist und Mittel zum Spannen des Quergurtes um den Behälter (14) aufweist.

3. Ladesicherung nach Anspruch 2, **dadurch gekennzeichnet, dass** die Breite der Gurte der Ladesicherung in etwa der Breite der Gurte des Kraftfahrzeug-Sicherheitsgurtes entspricht oder hiervon abweicht und an den Kreuzungspunkten (3) senkrecht, diagonal oder in einem bestimmten Winkel verlaufend miteinander verbunden und an dem umlaufenden Abschlussgurt (5) befestigt sind.

4. Ladesicherung nach Anspruch 3, **dadurch gekennzeichnet, dass** die seitlichen äußeren Quergurte (4) einseitig an einem Längsabschnitt des umlaufenden Abschlussgurtes (5) befestigt sind und die zweiten Enden als Ösen ausgeführt und verschiebbar auf den Überlängen (6) der umlaufenden Gurte (5) angebracht sind.

5. Ladesicherung nach Anspruch 1, **dadurch gekennzeichnet, dass** mindestens ein seitlicher Längsabschnitt des umlaufenden Gurtes (5) Umlenk- und Spannelemente (7) zur Aufnahme des anderen Gurtendes aufweist oder dass Rastverschlusselemente an beiden Abschnitten vorgesehen sind, die durch Ineinanderstecken miteinander verbindbar sind, welche Rastverschlusselemente mindestens einseitig Umlenk- und Spannelemente (7) zum Verkürzen oder Verlängern des Abschlussgurtes (5) aufweisen.

6. Ladesicherung nach Anspruch 1, **dadurch gekennzeichnet, dass** auf einer Überlänge (6) ein Ring oder eine Öse (11) vorgesehen ist, der oder die mindestens eine solche Längserstreckung und einen Öffnungsspalt zum Einführen des Becken- oder Schultergurtes des Kraftfahrzeug-Sicherheitsgurtes und ein Verschlusselement zum Verschließen des Öffnungsspaltes nach der Anbringung aufweist, und/oder dass an mindestens einer der beiden Überlängen (6) des umlaufenden Gurtes (5) ein Einhakschlosselement oder eine Schlosszunge mit einer Öse (11) verschiebbar aufgebracht ist und dass das Einhakschlosselement, auf einen Querbolzen eines Fixpunktes am Sitz oder an der Fahrzeugkarosserie aufsetzbar und hieran befestigbar ist oder die Schlosszunge in das Schloss eines Sicherheitsgurtes einsteckbar ist.

7. Ladesicherung nach Anspruch 6, **dadurch gekennzeichnet, dass** der Ring oder die Öse (11) gegen mindestens einseitiges seitliches longitudinales Verschieben auf dem Schulter- oder Beckengurt des Kraftfahrzeug-Sicherheitsgurtes mittels mindestens eines quer auf dem Gurtabschnitt des Schulter- oder Beckengurtes aufgebrachten, seitlich an dem Ring vorgesehenen Klemmelementes gesichert ist.

8. Ladesicherung nach Anspruch 5, **dadurch gekennzeichnet, dass** zwei Umlenk- und Spannelemente (7) vorgesehen sind, die jeweils zwischen der Öse des äußeren Quergurtes (4) und dem nächstfolgenden Quergurt (1) angeordnet sind.

9. Ladesicherung nach Anspruch 1, **dadurch gekennzeichnet, dass** die Gurte (1, 2, 5) und/oder Gurtabschnitte zur Herstellung einer festen Verbindung zwischen den Gurten oder zur Bildung von Schlaufen durch Nähte(21, 22, 23, 24, 25, 26, 27, 28, 30) miteinander verbunden sind, kreis-, oval-, oder spiralförmig verlaufend ausgebildet sind und eine bestimmte Anzahl paralleler oder spiralförmiger Nahtspuren aufweisen, und dass die Stichlängen der Nähte gleich oder abweichend von Naht zu Naht sind oder innerhalb einer Naht variieren.

10. Ladesicherung nach Anspruch 9, **dadurch gekennzeichnet, dass** in einer ersten kreis-, oval- oder spiralförmigen Anordnung eine weitere gleichförmige Anordnung in die Zwischenräume der Nähte eingefügt ist.

11. Ladesicherung nach Anspruch 9, **dadurch gekennzeichnet, dass** bei spiralförmiger Anordnung die Naht (30) vom Zentrum aus beginnend angelegt ist und das Ende der äußeren Naht als Verbindungsnaht in radialer Richtung die Spiralanordnung durchsetzend nach innen verläuft.

12. Ladesicherung nach Anspruch 9 oder 10, **dadurch gekennzeichnet, dass** bei kreis- oder ovalförmiger Anordnung die Nähte (21, 22, 23, 24) nach folgendem Nähbild genäht sind:
a) Naht (21): innenliegend, kreis- oder ovalförmig ausgenäht mit anschließender Verbindungsnaht (29a) in radialer oder seitlicher Richtung nach außen verlaufend,
b) Naht (22): parallel zur 1. Naht (21) verlaufend, wobei eine Verbindungsnaht in Reihe zur 1. Verbindungsnaht (29a) oder versetzt hierzu nach außen verlaufend vorgesehen ist,
c) Naht (23): kreis- oder ovalförmige Naht, parallel zu der 1. und 2. Naht (21, 22), ohne oder mit weiterer Verbindungsnaht (29a), falls weitere parallele Nähte (24) zu den Kreis- oder Ovalnähten vorgesehen sind.

13. Ladesicherung nach Anspruch 9, **dadurch gekennzeichnet, dass** von der Außennaht (24) beginnend in etwa um eine halbe Teilung zwischen den benachbarten kreis- oder ovalförmigen Nähten (24, 23) nach innen verlaufend ein erster Abschnitt einer Verbindungsnaht (29b) vorgesehen ist und
- dass hiervon ausgehend eine zweite Anordnung mit einer äußeren Zwischennaht (25) parallel zu den vorher angelegten kreis- oder ovalförmigen Nähten (24, 23) vorgesehen ist, wobei diese zusätzliche Zwischennaht (25) in die gleiche Richtung oder in die entgegengesetzte Richtung zu den zuvor eingebrachten Nähten (21, 22, 23, 24) verläuft,
- dass auf Höhe und parallel zur vorhandenen Verbindungsnaht (29a) oder abgesetzt hiervon ein weiterer Abschnitt der Verbindungsnaht (29b) in den Zwischenraum der nächstfolgenden, benachbarten Nähte (23, 22) reichend eingebracht ist,
- dass in den Zwischenraum der nächstfolgenden, benachbarten Nähte (23, 22) eine zusätzliche Zwischennaht (26) von dem Ende der Verbindungsnaht (29b) ausgehend kreis- oder ovalförmig eingebracht ist und
- dass zwischen den nächstfolgenden beiden Nähten (22, 21) eine weitere Zwischennaht (27) nach Einbringung eines Abschnittes der Verbindungsnaht (29b) vorgesehen ist und
- dass davon ausgehend eine weitere kreis- oder ovalförmige Innennaht (28) angelegt ist, die über einen weiteren Abschnitt der Verbindungsnaht (29b) angekoppelt ist, wobei das Fadenende im Innenbereich der Verbindungsnaht zwischen dem inneren Nähkreis (Naht 28) und dem nächstfolgenden (Naht 21) endet.

14. Ladesicherung nach Anspruch 13, **dadurch gekennzeichnet, dass** die Verbindungsnaht (29b) bzw. der Verbindungsgang radial und parallel zur ersten Verbindungsnaht (29a) verläuft.

15. Ladesicherung nach einem der vorhergehenden Ansprüche, **gekennzeichnet** für die Verwendung zur Sicherung eines tragbaren Tiertransportbehälters oder eines Behältnisses für Kleinkinder.

## Claims

1. Load securing means for fastening a container or bulky objects on a seat on a vehicle with safety belts and with lock elements for the safety belts, wherein the load securing means consists of crossing belts (1, 2) sewn and/or welded together, wherein the size of the occupied area is designed to be such that the load securing means completely covers at least the front surface of the container (14), which rests on the seat and bears by the rear side against the backrest, and engages by at least one narrow region over the upper side and by side sections over part regions of the side parts of the container (14), **characterised in that**
- the load securing means comprises an encircling closure (5), which is variable in length at least at one longitudinal side, with laterally protruding overlengths at which fastening elements are provided,
- the belt ends are fastened to the length sections of the encircling belt (5) and
- the fastening elements (11, 12, 13) are provided at the side sections for connection with a shoulder or lap belt of the safety belt and/or with a plug-in lock for the lock tongue of the motor vehicle's own safety belt and/or for fixing to fixing points at the backrest or in the region of the transition of the backrest to the seating part of the seat.

2. Load securing means according to claim 1, **characterised in that** the belt system comprises at least one transverse belt (1, 2, 10), which is fastened at least to the encircling closure belt (15) transversely to the length sections thereof and can be laid around the container (14) and which is fastenable to a transverse belt section (8) at the other length section of the encircling belt (5) and has means for tightening the transverse belt around the container (14).

3. Load securing means according to claim 2, **characterised in that** the width of the belts of the load securing means corresponds approximately with the width of the belts of the motor vehicle safety belt or differs therefrom and the belts extending vertically, diagonally or at a specific angle are connected together at the crossing points (3) and fastened to the encircling closure belt (5).

4. Load securing means according to claim 3, **characterised in that** the lateral outer transverse belts (4) are fastened at one end to a length section of the encircling closure belt (5) and the second ends are formed as eyes and displaceably mounted on the overlengths (6) of the encircling belts (5).

5. Load securing means according to claim 1, **characterised in that** at least one lateral length section of the encircling belt (5) has deflecting and tightening elements (7) for reception of the other belt end or that detent closure elements are provided at both sections and are connectible together by plugging into one another, which detent closure elements have deflecting and tightening elements (7), at least at one end, for shortening or lengthening the closure belt (5).

6. Load securing means according to claim 1, **characterised in that** provided on one overlength (6) is a ring or an eye (11), which has at least one such length extension and an opening gap for introduction of the lap or shoulder belt of the motor vehicle safety belt and a closure element for closing the opening gap after application, and/or that a hook-in lock element or a lock tongue with an eye (11) is displaceably mounted on at least one of the two overlengths (6) of the encircling belt (5) and that the hook-in lock element is placeable on a transverse pin of a fixing point at the seat or at the vehicle bodywork and fastenable thereto or the lock tongue is insertable into the lock of a safety belt.

7. Load securing means according to claim 6, **characterised in that** the ring or the eye (11) is secured on the shoulder or lap belt of the motor vehicle safety belt against lateral longitudinal displacement at at least one end by means of at least one clamping element mounted transversely on the belt section of the shoulder or lap belt and provided laterally at the ring.

8. Load securing means according to claim 5, **characterised in that** two deflecting and tightening elements (7), which are respectively arranged between the eye of the outer transverse belt (4) and the next-following transverse belt (1), are provided.

9. Load securing means according to claim 1, **characterised in that** the belts (1, 2, 5) and/or belt sections are, for formation of a fixed connection between the belts or for formation of loops, connected together by seams (21, 22, 23, 24, 25, 26, 27, 28, 30), are formed to extend circularly, ovally or spirally and have a defined number of parallel or spiral seam tracks and that the stitch lengths of the seams are the same or differ from seam to seam or vary within a seam.

10. Load securing means according to claim 9, **characterised in that** inserted into a first circular, oval or spiral arrangement is a further uniform arrangement in the intermediate spaces of the seams.

11. Load securing means according to claim 9, **characterised in that** in the case of a spiral arrangement the seam (30) is established starting from the centre and the end of the outer seam runs inwardly as connecting seam in radial direction through the spiral arrangement.

12. Load securing means according to claim 9 or 10, **characterised in that** in the case of a circular or oval arrangement the seams (21, 22, 23, 24) are stitched according to the following stitch pattern:
a) seam (21): disposed inwardly, stitched in circular or oval shape with joining connecting seam (29a), running outwardly in radial or lateral direction,
b) seam (22): running parallel to the first seam (21), wherein a connecting seam is provided in line with the first connecting seam (29a) or offset relative thereto to run outwardly,
c) seam (23): circular or oval seam, parallel to the first and second seams (21, 22), with or without further connecting seam (29a), if further parallel seams (24) relative to the circular or oval seams are provided.

13. Load securing means according to claim 9, **characterised in that** a first section of a connecting seam (29b) is provided, starting from the outer seam (24), to run inwardly at approximately half the pitch between the adjacent circular or oval seams (24, 23) and
- starting therefrom a second arrangement with an outer intermediate seam (2) parallel to the previously placed circular or oval seams (24, 23) is provided, wherein this additional intermediate seam (25) runs in the same direction as or in the opposite direction to the previously introduced seams (21, 22, 23, 24),
- that a further section of the connecting seam (29b) is introduced at the height of and parallel to the existing connecting seam (29a) or offset therefrom to extend in the intermediate space of the succeeding adjacent seams (23, 22),
- that an additional intermediate seam (26) is introduced, starting from the end of the connecting seam (29b), in circular or oval shape into the intermediate space of the succeeding adjacent seams (23, 22) and
- a further intermediate seam (27) is provided between the succeeding two seams (22, 21) after introduction of a section of the connecting seam (29b) and
- that starting therefrom a further inner seam (28) of circular or oval shape, which is coupled by way of a further section of the connecting seam (29b), is placed in position, wherein the thread end ends in the inner region of the connecting seam between the inner seam circle (seam 28) and the succeeding one (seam (21).

14. Load securing means according to claim 9, **characterised in that** the connecting seam (29b) or the connecting path runs radially and parallel to the first connecting seam (29a).

15. Load securing means according to any one of the preceding claims, **characterised** for the use for securing a portable animal transport container or a container for small children.

## Revendications

1. Dispositif de blocage de chargement pour fixer un contenant ou des objets volumineux sur un siège dans un véhicule avec des ceintures de sécurité et avec des éléments de verrouillage pour les ceintures de sécurité,
dans lequel le dispositif de blocage de chargement se compose de ceintures (1, 2) qui se croisent, cousues et/ou soudées l'une à l'autre, la taille de la surface occupée étant conçue aussi grande que le dispositif de blocage de chargement recouvre totalement au moins la surface antérieure du contenant (14) posé sur le siège et appliqué par sa face postérieure contre le dossier du siège, et coiffe par au moins une zone étroite la face supérieure du contenant (14) et par des tronçons latéraux des zones partielles des parties latérales du contenant (14),
**caractérisé en ce que** le dispositif de blocage de chargement comprend une ceinture de terminaison (5) périphérique, de longueur variable, au moins sur un côté longitudinal, avec des surlongueurs (6) en dépassement latéral, et sur laquelle sont prévus des éléments de fixation,
- **en ce que** les extrémités de ceintures sont fixées au niveau des tronçons longitudinaux de la ceinture périphérique (5), et
- **en ce que** les éléments de fixation (11, 12, 13) sont prévus sur les tronçons latéraux en vue de la liaison avec une ceinture d'épaule ou une ceinture de bassin de la ceinture de sécurité et/ou sont pourvus d'un verrou à enfichage pour la languette de verrouillage de la ceinture de sécurité propre au véhicule, et/ou sont prévus pour la fixation à des points fixes sur le dossier ou dans la région de la transition du dossier à la partie d'assise du siège.

2. Dispositif de blocage de chargement selon la revendication 1, **caractérisé en ce que** le système de ceintures comprend au moins une ceinture transversale (1, 2, 10) fixée au moins sur la ceinture de terminaison périphérique (5) transversalement aux tronçons longitudinaux de celle-ci, ceinture transversale qui peut être disposée autour du contenant (14) et peut être fixée sur un tronçon de ceinture transversal (8) sur l'autre tronçon longitudinal de la ceinture périphérique (5), et comprend des moyens pour tendre la ceinture transversale autour du contenant (14).

3. Dispositif de blocage de chargement selon la revendication 2, **caractérisé en ce que** la largeur des ceintures du dispositif de blocage de chargement correspond approximativement à la largeur des ceintures du système de ceintures de sécurité du véhicule, ou diffère de cette largeur, et **en ce que** lesdites ceintures sont reliées les unes aux autres de manière à s'étendre perpendiculairement, en diagonale ou sous un angle déterminé au niveau des points de croisement (3), et sont fixées à la ceinture de terminaison périphérique (5).

4. Dispositif de blocage de chargement selon la revendication 3, **caractérisé en ce que** les ceintures transversales (4) latérales extérieures sont fixées d'un côté à un tronçon longitudinal de la ceinture de terminaison périphérique (5), et les secondes extrémités sont réalisées sous forme d'oeillets et sont montées avec faculté de déplacement sur les surlongueurs (6) des ceintures périphériques (5).

5. Dispositif de blocage de chargement selon la revendication 1, **caractérisé en ce qu'**au moins un tronçon longitudinal latéral de la ceinture périphérique (5) comprend des éléments de renvoi et de tensionnement (7) pour la réception de l'autre extrémité de ceinture, ou en ce que des éléments de fermeture à encliquetage sont prévus sur les deux tronçons, qui peuvent être reliés ensemble par enfichage mutuel, lesdits éléments de fermeture à encliquetage comprenant au moins des éléments de renvoi et de tensionnement (7) sur un côté pour raccourcir ou pour rallonger la ceinture de terminaison (5).

6. Dispositif de blocage de chargement selon la revendication 1, **caractérisé en ce qu'**un anneau ou un oeillet (11) est prévu sur une surlongueur (6), celui-ci présentant une extension longitudinale et une fente d'ouverture en vue de l'introduction de la ceinture de bassin ou la ceinture d'épaule du système de ceintures de sécurité du véhicule, et un élément de fermeture pour refermer la fente d'ouverture après l'application de la ceinture, et/ou **en ce qu'**un élément de verrou à accrochage ou une languette de verrou comportant un oeillet (11) est monté(e) avec faculté de déplacement sur l'une au moins des deux surlongueurs (6) de la ceinture périphérique (5), et **en ce que** l'élément de verrou à accrochage est susceptible d'être posé sur un goujon transversal d'un point fixe sur le siège ou sur la carrosserie du véhicule et d'y être fixé, ou la languette de verrou est susceptible d'être enfichée dans le verrou d'une ceinture de sécurité.

7. Dispositif de blocage de chargement selon la revendication 6, **caractérisé en ce que** l'anneau ou l'oeillet (11) est bloqué à l'encontre d'un déplacement longitudinal latéral sur au moins un côté par rapport à la ceinture d'épaule ou à la ceinture de bassin du système de ceintures de sécurité du véhicule au moyen d'au moins un élément de coincement prévu latéralement sur la bague et monté transversalement sur le tronçon de la ceinture d'épaule ou la ceinture de bassin.

8. Dispositif de blocage de chargement selon la revendication 5, **caractérisé en ce qu'**il est prévu deux éléments de renvoi et de tensionnement (7) qui sont respectivement agencés entre l'oeillet de la ceinture transversale extérieure (4) et la ceinture transversale (1), directement à la suite de cette dernière.

9. Dispositif de blocage de chargement selon la revendication 1, **caractérisé en ce que** les ceintures (1, 2, 5) et/ou les tronçons de ceintures sont reliés les uns/les unes aux autres par des coutures (21, 22, 23, 24, 25, 26, 27, 28, 30) pour établir une liaison ferme entre les ceintures ou pour réaliser des boucles, les coutures étant réalisé(e)s sous forme circulaire, ovale ou spiralée, et comprenant un certain nombre de lignes de coutures parallèles ou de formes spiralées, et **en ce que** la longueur des points des coutures est égale ou différente d'une couture à l'autre ou peut varier à l'intérieur d'une couture.

10. Dispositif de blocage de chargement selon la revendication 9, **caractérisé en ce qu'**un autre agencement de forme identique est intégré, à l'intérieur d'un premier agencement de forme circulaire, ovale ou spiralé, dans les intervalles entre les coutures.

11. Dispositif de blocage de chargement selon la revendication 9, **caractérisé en ce que** lors d'un agencement de forme spiralée, la couture (30) est disposée de manière à s'étendre depuis le centre, et l'extrémité de la couture extérieure s'étend, à titre de couture de liaison, en direction radiale vers l'intérieur et de manière à traverser l'agencement spiralé.

12. Dispositif de blocage de chargement selon la revendication 9 ou 10, **caractérisé en ce que** lors d'un agencement de forme circulaire ou ovale, les coutures (21, 22, 23, 24) sont disposées d'après le motif de couture suivant :
a) couture (21) : cousue du côté intérieur, sous forme circulaire ou ovale, avec une couture de liaison terminale (29a) s'étendant en direction radiale ou en direction latérale vers l'extérieur,
b) couture (22) : parallèle à la première couture (21), une couture de liaison étant prévue en série avec la première couture de liaison (29a) ou de manière à s'étendre en décalage vers l'extérieur par rapport à celle-ci,
c) couture (23) : couture de forme circulaire ou ovale, parallèle à la première et à la seconde couture (21, 22), avec ou sans autre couture de liaison (29a), dans le cas où il est prévu d'autres coutures parallèles (24) aux coutures circulaires ou ovales.

13. Dispositif de blocage de chargement selon la revendication 9, **caractérisé en ce qu'**il est prévu un premier tronçon d'une couture de liaison (29b) qui s'étend vers l'intérieur en commençant de la couture extérieure (24) approximativement à la moitié de la séparation entre les coutures circulaires ou ovales voisines (24, 23), et
- partant de celle-ci, il est prévu un second agencement avec une couture intermédiaire extérieure (25) parallèle aux coutures circulaires ou ovales (24, 23) réalisées auparavant, ladite couture intermédiaire additionnelle (25) s'étendant dans la même direction ou dans la direction opposée par rapport aux coutures (21, 22, 23, 24) réalisées auparavant,
- à la hauteur de la couture de liaison existante (29a) et parallèlement à celle-ci ou encore en décalage de celle-ci, est réalisé un autre tronçon de la couture de liaison (29b) qui s'étend jusque dans l'intervalle des coutures voisines (23, 22) directement à la suite,
- dans l'intervalle des coutures voisines (23, 22) directement à la suite est réalisée une couture intermédiaire supplémentaire (26) de forme circulaire ou ovale en partant de l'extrémité de la couture de liaison (29b),
- entre les deux coutures (22, 21) directement à la suite, il est prévu une autre couture intermédiaire (27) après réalisation d'un tronçon de la couture de liaison (29b), et
- en partant de celle-ci, est réalisée une autre couture intérieure (28) de forme circulaire ou ovale, avec accouplement sur un autre tronçon de la couture de liaison (29b), telle que l'extrémité du fil se termine dans la région intérieure de la couture de liaison entre le cercle de couture intérieure (couture 28) et la couture directement à la suite (couture 21).

14. Dispositif de blocage de chargement selon la revendication 13, **caractérisé en ce que** la couture de liaison (29b) ou le brin de liaison s'étend radialement et parallèle à la première couture de liaison (29a).

15. Dispositif de blocage de chargement selon l'une des revendications précédentes, **caractérisé en ce qu'**il est prévu pour l'utilisation pour le blocage d'un conteneur portable de transport d'animaux, ou d'un contenant pour enfants ou nourrissons.
